# EUROPEAN PATENT APPLICATION

(11) **EP 1 278 279 A1**
(43) Date of publication of application: **22.01.2003**
(21) Application number: 01306189.0
(22) Date of filing: 18.07.2001
(51) Int. Cl.: H01S 3/30

(54) **Raman cascade light sources**

(71) Applicant: UNIVERSITY OF SOUTHAMPTON, Southampton, Hampshire SO17 1BJ (GB)
(72) Inventor: Grudinin, Anatoly B., c/o Centre for Enterprise &, Southampton SO17 1BJ, Hampshire (GB); Nilsson, Johan, c/o Centre for Enterprise &, Southampton SO17 1BJ, Hampshire (GB)
(74) Representative: Haines, Miles John

(57) **Abstract**

A Raman cascade laser comprising a 1060 nm pump source (10), an input waveguide (12) and a ring waveguide (14) coupled to the input waveguide. The ring waveguide is at least in part formed of phosphosilicate fiber so as to Raman scatter the pump beam from the pump wavelength to a gain wavelength that is offset from the pump wavelength by a first Raman step of 1330 cm⁻¹. Light is coupled out with an output waveguide (18) coupled to the ring waveguide at an emission wavelength offset by a second Raman step of 1330 cm⁻¹ from the gain wavelength. Other embodiments provide incoherent sources based on the same 2-step Raman cascade, or a 2-step Raman cascade based on a first phosphosilicate 1330 cm⁻¹ Raman step followed by a second step of 680-820 cm⁻¹. With the invention, it is possible to avoid a Raman cascade involving a larger number of steps while at the same time avoiding use of 1300 nm pump sources. Moreover, the need for high-reflectivity fiber Bragg gratings at the gain wavelength, and also the emission wavelength, can be reduced through wavelength selection provided by the coupling to the ring waveguide.

## Description

### BACKGROUND OF THE INVENTION

The invention relates to light sources, such as lasers and amplifiers, of the kind based on cascaded Raman gain in a linear or ring resonator.

There is a need for high-power lasers in the wavelength range 1450-1500 nm to act as pump sources for Raman amplification in the 1530-1620 nm wavelength range which is important for optical telecommunications. Furthermore, there is a need for high-power lasers operating at wavelength of around 1480 nm for pumping of erbium-doped fiber amplifiers (EDFAs). For both these applications, laser sources with a single transverse mode are preferred. Powers of between 1-10 W are typically demanded. One option for high-power pump sources at these wavelengths is to use laser diodes. However, single-moded laser diodes at these wavelengths are limited in power to below 1 W, and considerable less in currently commercially available versions. Multiplexing diodes at different wavelengths is an option for overcoming this limitation, but is expensive.

An alternative approach is to provide a high-power laser at a shorter wavelength than desired and then to use a Raman cascade of two or more Raman scattering processes to produce lasing at the desired wavelength. Lasers of this kind are often referred to as Raman cascade lasers. Several Raman cascade lasers have been proposed which are based on a pump laser in the form of an ytterbium-doped fiber laser (YDFL) which can be designed to lase at wavelengths between around 1060-1120 nm. YDFLs are typically cladding pumped.

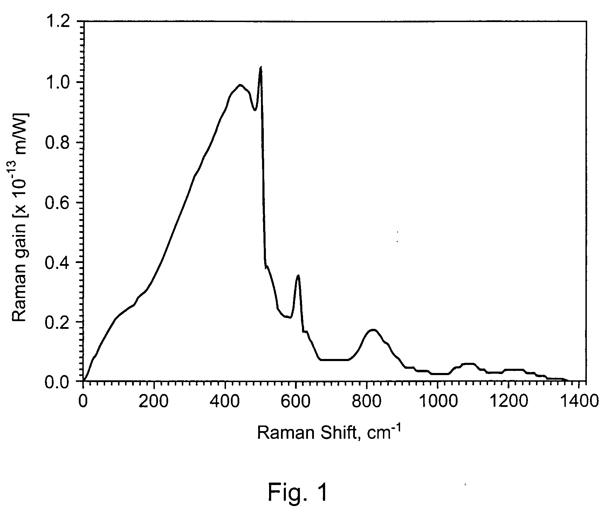

Figure 1 shows the Raman spectrum of silica which is of course applicable to pure silica optical fiber. The silica Raman spectrum can also be used to design Raman cascade lasers in fibers made of related compositions, such as germanosilicate optical fibers. The plot shows the Raman cross-section as a function of Raman shift where Raman shift is plotted in wavenumbers (cm⁻¹). As can be seen, silica has a principal Raman peak at around 450 cm⁻¹, i.e. 13.2 THz. This Raman shift corresponds to a wavelength change of about 50 nm for a wavelength of 1060 nm, rising to a change of about 100 nm for a wavelength of 1480 nm.

Figure 2 shows a Raman cascade laser according to EP 0984532 A [1]. This Raman cascade laser has a pump source 10 in the form of a laser having a lasing wavelength of 1117 nm. The pump laser 10 supplies a pump beam into a silica optical fiber 12 which is coiled in a loop. As illustrated, a pair of fiber Bragg gratings (FBGs) having Bragg wavelengths of 1175, 1240, 1310 and 1395 nm respectively are arranged to straddle the loop. Each pair of wavelength matched Bragg gratings forms a linear cavity for the wavelength concerned. In addition, a further pair of FBGs is provided at the desired emission wavelength of 1480 nm. The 1480 nm FBG in the input waveguide constitutes the back reflector of a linear laser cavity, and is thus high-reflectivity (HR), and the 1480 nm FBG of the output waveguide constitutes the output coupler (OC), and is thus low-reflectivity.

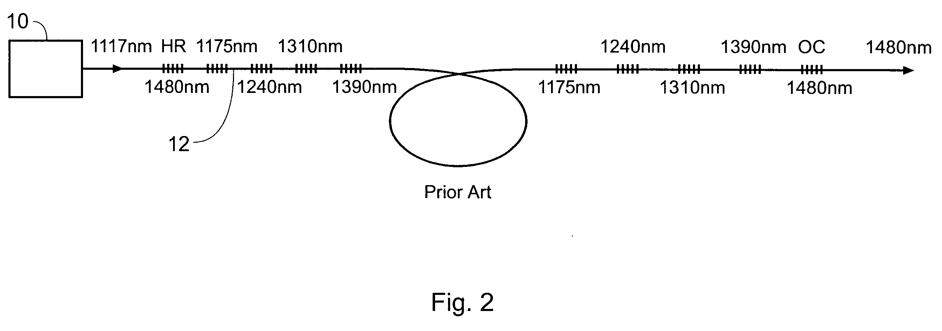

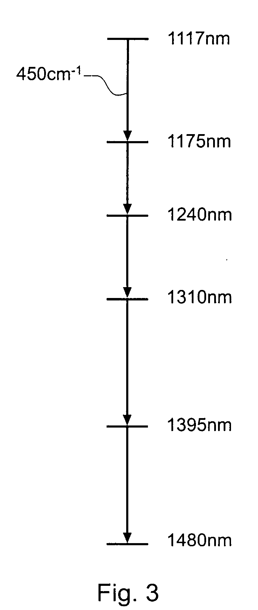

Figure 3 illustrates the Raman cascade used by the laser of Figure 2. The Raman cascade comprises a succession of steps (5 in all) that take light from the pump wavelength of 1117 nm through to the lasing wavelength of 1480 nm, the steps occurring at approximately 1175, 1240, 1310 and 1395 nm. Each step corresponds to a Raman shift of 450 cm⁻¹, i.e. the peak Raman gain for silica from which the optical fiber constituting the input waveguide, output waveguide and ring waveguide are made. The FBG pairs at 1175, 1240 and 1310 nm provide three linear cavities at 1, 2 and 3 Raman steps from the pump wavelength, thereby allowing for the build up of gain at each of those intermediate wavelengths.

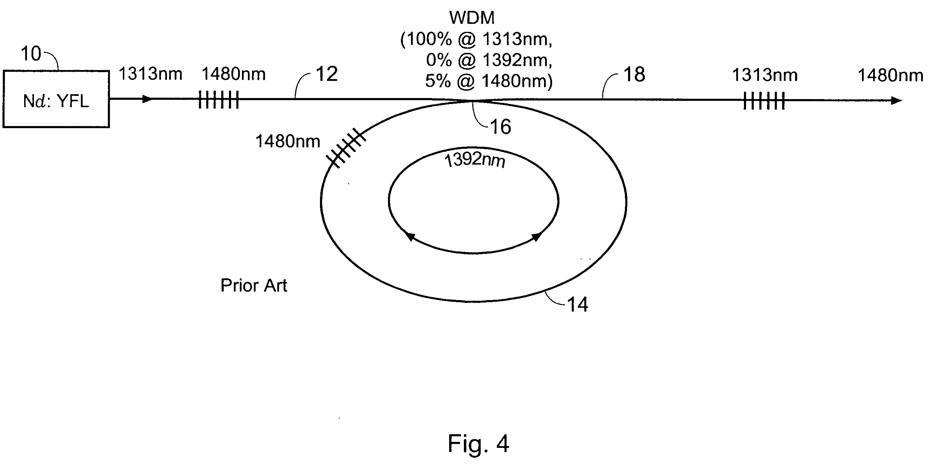

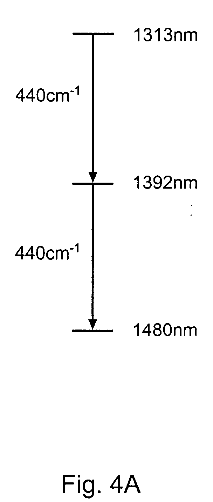

Figure 4 shows a further prior art Raman cascade laser according to Chang et al [2]. The laser comprises a pump source 10, input waveguide 12, fused wavelength division multiplexing (WDM) coupler 16, output waveguide 18 and Raman gain ring waveguide 14. However, in the case of the prior art laser of Figure 4, the pump source is a Nd: YFL (Yttrium Lithium Flouride) having a lasing wavelength of 1313 nm. The WDM coupler 16 is manufactured to couple all the light at the pump wavelength of 1313 nm from the input waveguide 12 into the ring waveguide 14, to couple none of the light at 1392 nm from the ring waveguide to the input or output waveguides, and to couple 5% of light at 1480 nm out of the ring waveguide 14 into the input waveguide 12. A linear cavity is thus formed between the 1480 nm gratings that is coupled to a ring cavity 14 that retains an intermediate wavelength of 1392 nm and from which only 5% of the 1480 nm power is coupled out.

Figure 4A illustrates the Raman cascade used by this laser. As can be seen, the Raman cascade has two steps, each corresponding to the principal 450 cm⁻¹ Raman shift of silica. The pump wavelength of 1313 nm is thereby down-shifted through the intermediate wavelength of 1392 nm to the desired output wavelength of 1480 nm. The design of Figure 4 differs from that of Figure 2 in that the ring waveguide 14 constitutes a ring cavity for the intermediate wavelength of 1392 nm by virtue of the design of the WDM coupler 16. The coupling characteristics of the WDM coupler 16 ensure that energy in the 1392 nm wavelength band builds up in the ring to provide the necessary gain. The laser cavity at the emission wavelength of 1480 nm is formed by a 1480 nm FBG in the input waveguide 12 together with a 1480 nm FBG located in the ring waveguide 14. The design thus provides a linear cavity at the lasing wavelength with one mirror external to the ring and one mirror internal to the ring. Moreover, the ring waveguide provides a ring cavity for the gain wavelength, which is not the case in the design of Figure 2. The additional 1313 nm FBG in the output waveguide 18 is for reflecting light at this wavelength that is coupled out of the ring waveguide back into the ring to provide a further opportunity for the desired Raman scattering and gain to take place. Finally, it is noted that the fiber used in this case is germanosilicate fiber.

A four-step Raman cascade based on 440 cm⁻¹ Stokes shifts has been proposed in a ring cavity design [5]. Seeded and unseeded source embodiments are disclosed.

In general, it is more desirable to start with a 1060-1120 nm pump source, since pump lasers at these wavelengths offer several advantages. However, the multistep cascade needed to step down from 1060-1120 nm pump wavelengths through to the desired emission wavelengths of 1450-1500 nm is generally undesirable in that large numbers of wavelength-selective components, such as FBGs, are required. The simple two-step cascade that is possible with a 1300 nm pump source is desirable, but results in use of a pump source that has a number of disadvantages.

To address these problems Dianov, Karpov and co-workers have proposed use of a two-step cascade in phosphosilicate fiber based on the larger 1330 cm⁻¹ Stokes shift of this material, compared with conventional silica fiber [6-10].

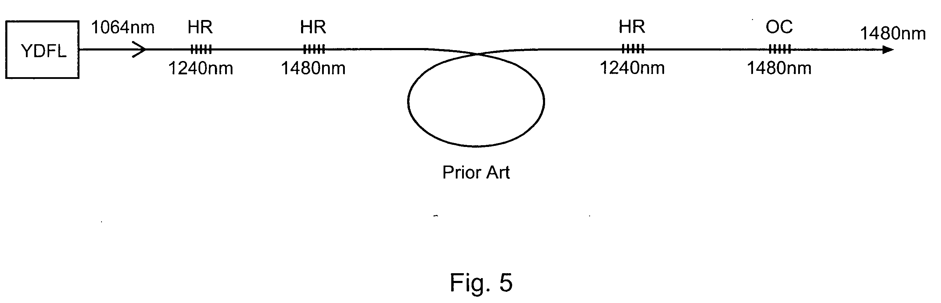

Figure 5 shows one of these laser designs [7]. The design is similar to that of Figure 2 except that the silica fiber is replaced with phosphosilicate fiber and the Raman cascade is based on the 1330 cm⁻¹ Stokes shift that is specific to phosphosilicate. This is much larger than the principal 450 cm⁻¹ Stokes shift of silica which allows the four pairs of gratings of the silica fiber design of Figure 2 to be replaced with only two pairs of gratings at 1240 nm and 1480 nm respectively to downshift from a pump wavelength of 1.06 µm (generatable by an Yb-doped fiber laser (YDFL) [9]) to an emission wavelength of 1.48 µm.

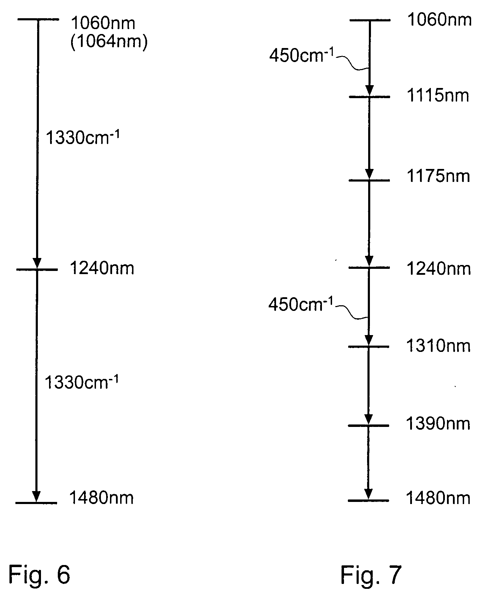

Figure 6 shows the two-step Raman cascade process used by the laser of Figure 5. Starting from a pump wavelength of 1064 nm, light is scattered to an intermediate gain wavelength of 1240 nm via the 1330 cm⁻¹ phosphosilicate Raman peak. A further scattering from this peak then results in an emission wavelength of 1480 nm being reached.

Figure 7 shows by way of comparison the corresponding six-step cascade from 1060 nm-1480 nm using the main silica Raman line at around 450 cm⁻¹.

However, despite the reduction in the number of grating pairs that is possible using a two-step Raman cascade based on the 1330 cm⁻¹ phosphosilicate Stokes shift, the presence of the high-reflectivity grating pair at 1240 nm is still undesirable, since the fabrication of HR FBGs is relatively onerous and imposes design constraints on the laser.

### SUMMARY OF THE INVENTION

According to a first aspect of the invention there is provided a light source comprising:
(a) a pump source operable to emit a pump beam at a pump wavelength;
(b) an input waveguide arranged to receive the pump beam from the pump source;
(c) a wavelength selective coupler connected to the input waveguide;
(d) a ring waveguide connected to the input waveguide by the wavelength selective coupler, the wavelength selective coupler being formed so as to receive at least a part of the pump beam into the ring waveguide, the ring waveguide having at least a portion that is phosphosilicate so as to Raman scatter the pump beam from the pump wavelength to a gain wavelength that is offset from the pump wavelength by a first Raman step of 1300-1400 cm⁻¹, wherein the wavelength selective coupler is further formed to retain light at the gain wavelength in the ring waveguide, thereby to form a resonant cavity at the gain wavelength for producing Raman gain in the ring waveguide at the gain wavelength; and
(e) an output waveguide connected to the ring waveguide by the wavelength selective coupler, the wavelength selective coupler being still further formed to couple out from the ring waveguide, as an emission beam, light at an emission wavelength that is offset by a second Raman step from the gain wavelength.

Phosphosilicate gain fiber can thus be used, not only to access a larger Stokes shift of 1330 cm⁻¹, but also to allow accurate wavelength control within a broadband cavity which, of itself, provides no precise wavelength control. This is possible because of the narrow gain peak of the 1330 cm⁻¹ scattering line that can be provided in phosphosilicate fiber. For example, cavities based on fused WDM couplers bounding phosphosilicate fiber can provide accurate wavelength control. It is thus not necessary to use narrowband feedback, such as with FBGs. This accurate wavelength control can not only provide for efficient gain suppression of Raman down-conversions of unwanted Raman shifts, but can also provide a cavity at the emission wavelength for wavelength selection, for example in order to providing lasing action, thus allowing HR FBGs to be dispensed with at the intermediate gain wavelength, and also even at the emission wavelength.

In several embodiments of the invention, the light source is a laser. More specifically, the light source may further comprise a laser cavity resonant at the emission wavelength and including the ring waveguide, whereby the light source is a laser.

The laser cavity may be formed of a linear cavity or a ring cavity. A linear laser cavity may be formed by first and second emission wavelength reflectors external to the ring waveguide. Alternatively, a linear laser cavity may be formed by a first emission wavelength reflector external to the ring waveguide and a second emission wavelength reflector internal to the ring waveguide.

In the case of a ring cavity for the lasing wavelength, the ring laser cavity may be congruent with the ring waveguide, i.e. the ring waveguide forms the ring resonator. Alternatively, the ring laser cavity may be formed in part by the ring waveguide and in part by a further waveguide.

In several other embodiments of the invention, the light source is an amplified stimulated emission (ASE) source, i.e. a source of incoherent radiation. In this case, the ring waveguide is not part of a cavity at the emission wavelength so that the emission beam is incoherent. In some ASE embodiments, a reflector may be provided to reflect light at the emission wavelength and cause it to traverse the ring waveguide in first and second passes to lower the gain threshold of the device.

In another group of embodiments, the light source is a so-called master oscillator power amplifier (MOPA). More generically, a MOPA may be referred to as a seeded source. In this case, the light source further comprises a seed source operable to emit a seed beam at the emission wavelength and arranged to couple the seed beam into the ring waveguide, whereby the seed beam is amplified into the emission beam by stimulated Raman scattering over the second Raman step.

In the MOPA embodiments, a seed beam router for the emission wavelength may be provided to reflect or otherwise route the seed beam so that it traverses the ring waveguide in at least first and second passes. The seed beam router may be arranged in the ring waveguide or external to the ring waveguide.

In some MOPA embodiments, the seed beam router is a polarization rotating mirror arranged to rotate the polarization state of the seed beam between the first and second passes, and wherein the light source further comprises a polarizing beam splitter (PBS) arranged in a common path of the seed and emission beams. A mirror reflective to the emission wavelength may be provided to one side of the PBS so as to initiate third and fourth passes of the seed beam in the ring waveguide, to provide a four-pass MOPA.

Advantageously, a rejection filter may be arranged in the ring waveguide to suppress a parasitic wavelength associated with a third Raman step offset by 400-500 cm⁻¹ from the gain wavelength.

The rejection filter may comprise a length of OH-containing waveguide, or a length of praseodymium-containing waveguide.

The rejection filter may alternatively be provided within the ring waveguide itself if the waveguide is designed so that the Stokes shifted wavelength is not well guided by the waveguide. This will be more readily achievable with the large 1330 cm⁻¹ Stokes shift of phosphosilicate fiber than with the 450 cm⁻¹ shift. The differential loss of the ring waveguide can additionally be controlled by providing an appropriate bend in the waveguide. This may be achieved simply in a fiber by bending the fiber with a certain radius of curvature to induce a desired amount of bend loss. In this way, the cut-off wavelength of the waveguide between good guiding and poor guiding can be shifted to shorter wavelengths. This can be used, for example, to reject wavelengths offset by 450 cm⁻¹ from 1480 nm. This kind of rejection filtering can be conveniently implemented in the ring waveguide, but could also be implemented in a separate fiber.

In a first group of embodiments, the second Raman step is offset from the gain wavelength by 1300-1400 cm⁻¹.

In a second group of embodiments, the second Raman step is offset from the gain wavelength by 680-820 cm⁻¹.

The gain wavelength in some embodiments is between 1230-1250 nm. In other embodiments, it is between 1300-1330 nm.

The pump wavelength is between 1050-1070 nm in one group of embodiments and is between 1100-1130 nm in another group of embodiments.

The emission wavelength of the light source is preferably between 1450-1500 nm, although other emission wavelengths are contemplated, e.g. 1650 nm.

According to a second aspect of the invention there is provided a method of generating an emission beam having an emission wavelength, comprising:
(a) inputting a pump beam at a pump wavelength into a ring waveguide comprising phosphosilicate;
(b) down-converting the pump beam by a first Raman step of 1300-1400 cm⁻¹ to form a gain beam having a gain wavelength at which the ring waveguide forms a resonant cavity at the gain wavelength to provide gain;
(c) down-converting the gain beam to the emission wavelength by a second Raman step; and
(d) coupling out from the ring waveguide a proportion of light at the emission wavelength to deliver the emission beam.

The method may further comprise: (e) inputting a seed beam at the emission wavelength into the ring waveguide, thereby to provide a seeded source, or so-called MOPA.

Alternatively, the method may further comprise: (e) providing a laser cavity resonant at the emission wavelength and including the ring waveguide, thereby to provide a laser.

Alternatively, the ring waveguide may not be part of a cavity at the emission wavelength, thereby to provide an ASE source.

### BRIEF DESCRIPTION OF THE DRAWINGS

For a better understanding of the invention and to show how the same may be carried into effect reference is now made by way of example to the accompanying drawings in which:
Figure 1 shows the Raman spectrum of silica.
Figure 2 shows a first prior art Raman cascade laser.
Figure 3 illustrates the Raman cascade used by the laser of Figure 2.
Figure 4 shows a second prior art Raman cascade laser.
Figure 4A illustrates the Raman cascade used by the laser of Figure 4.
Figure 5 shows a third prior art Raman cascade laser;
Figure 6 shows an example of a two-step Raman cascade process used by several embodiments of the invention based on phosphosilicate Raman scattering at around 1330 cm⁻¹.
Figure 7 shows by way of comparison the corresponding six-step cascade from 1060 nm-1480 nm using the main silica Raman line at around 450 cm⁻¹.
Figure 8 shows the Raman gain spectrum for a particular phosphosilicate optical fiber.
Figure 9 shows a laser according to a first embodiment of the invention.
Figure 10 shows a loss spectrum measured in an exemplary phosphosilicate fiber.
Figure 11 shows a laser according to a second embodiment of the invention.
Figure 12 shows a laser according to a third embodiment of the invention.
Figure 13 shows a laser according to a fourth embodiment of the invention.
Figure 14 shows a laser according to a fifth embodiment of the invention.
Figure 15 shows a laser according to a sixth embodiment of the invention.
Figure 16 shows an amplified stimulated emission (ASE) source according to a seventh embodiment of the invention.
Figure 17 shows an ASE source according to an eighth embodiment of the invention.
Figure 18 shows a single pass master oscillator power amplifier (MOPA) according to a 9th embodiment of the invention.
Figure 19 shows a double pass MOPA according to an 10th embodiment of the invention.
Figure 19A and 19B show two variants of the MOPA of Figure 19.
Figure 20 shows a double pass MOPA according to a 11th embodiment of the invention.
Figure 21 shows a four pass MOPA according to a 12th embodiment of the invention.
Figure 22 shows a double pass MOPA according to a 13th embodiment of the invention.
Figure 23 shows a single pass MOPA according to an 14th embodiment of the invention.
Figure 24 shows a single pass MOPA according to a 15th embodiment of the invention.
Figure 25 shows a laser according to a 16th embodiment of the invention.
Figure 26 illustrates Raman transitions relevant for the laser of Figure 25.
Figure 27 shows a laser according to a 17th embodiment of the invention.

### DETAILED DESCRIPTION

### Introduction

In the following embodiments a number of designs for lasers and other light sources are presented. All these embodiments have in common that they use phosphosilicate waveguides to provide a 2-step Raman cascade.

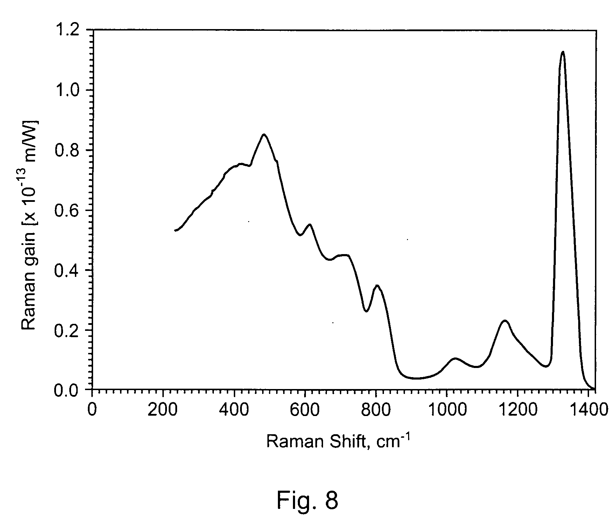

Figure 8 shows the Raman gain spectrum for a particular phosphosilicate optical fiber. This figure is to be compared with Figure 1 showing a corresponding spectrum for silica. The main Raman peaks centered at around 450 cm⁻¹ also occur in phosphosilicate fibers and are of course attributable to the silica component in such material. However, by contrast to the Raman spectrum for silica, that of phosphosilicate shows a very strong sharp Raman peak at around 1330 cm⁻¹. It is this Raman peak that is used in the Raman cascades of the embodiments described in the following. The strength of the gain at 1330 cm⁻¹ relative to that of 450 cm⁻¹ depends on the amount of phosphorous in the phosphosilicate fiber.

### 1060 nm Pumped 1480 nm Emission Laser Embodiments

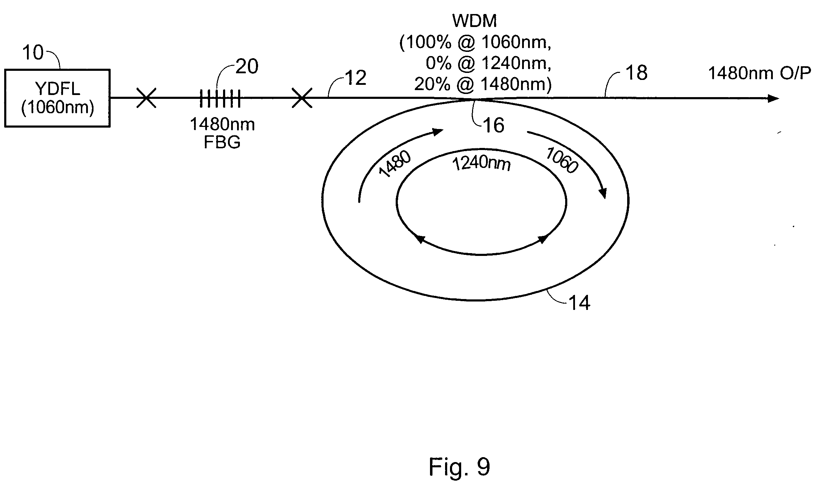

Figure 9 shows a first embodiment of the invention which is a laser having an emission wavelength of 1480 nm, a pump wavelength of 1060 nm and a gain wavelength of 1240 nm as illustrated by the process of Figure 8. The 1480 nm laser comprises a pump source in the form of a ytterbium-doped fiber laser (YDFL) 10 having an emission wavelength of 1060 nm as already mentioned. The pump laser 10 supplies its pump beam into an input waveguide 12. A 1480 nm fiber Bragg grating (FBG) 20 is arranged in the input waveguide, the role of which is described further below. The input waveguide 12 leads to a wavelength division multiplexing (WDM) coupler 16 which is a four-way coupler coupling the input waveguide 12 to an output waveguide 18 and to two ends of a ring waveguide 14 for providing Raman gain. At least a part of the ring waveguide 14 is phosphosilicate fiber. Preferably the whole of the ring waveguide is phosphosilicate in this embodiment. The specifications of the WDM coupler 16 are as stated in the figure. Namely, the WDM coupler is manufactured to couple substantially all the light at the pump wavelength of 1060 nm from the input waveguide into the ring waveguide and to couple substantially none of the light at the intermediate gain wavelength of 1240 nm out of the ring waveguide. Moreover, the WDM coupler 16 is manufactured to couple a fraction (stated to be 20% in the figure) of light at the emission wavelength out of the ring waveguide 14 into the output waveguide 18. In this embodiment, the input, output and ring waveguides are conveniently made of optical fiber. A typical length for the fiber would be 100m -1km, in one example 400m. However, other waveguides, for example planar waveguides, could also be used.

The FBG 20 serves to make the output from the ring waveguide substantially unidirectional. Without this component the gain in the ring waveguide 14 would be equal in both directions. The FBG 20 breaks the symmetry by introducing an external reflection. The FBG 20 can be relatively weak, since only a small amount of imbalance is sufficient to force substantially unidirectional output. (The output will not be completely unidirectional). The FBG 20 can be a low reflectivity component, any reflectivity value greater than about 10% should be suitable. Typical reflectivity values may be 70-80%, which allows easy fabrication. The FBG 20 is preferably a narrow-band component with a bandwidth of less than 2 nm. Functionally an equivalent component of less than 10 nm bandwidth would probably suffice.

The pump source 10 may be a cladding-pumped YDFL or YDFA (ytterbium-doped fiber amplifier). The WDM coupler 16 may be a fused fiber coupler which may be spliced to the ring waveguide. The specified wavelength-dependent transmission characteristics are achievable with fused fiber couplers using standard manufacturing methods. The input and output waveguide fibers may also be phosphosilicate, but need not be. A fused fiber coupler has the advantage that it can be made with very low excess loss, which is important for the configuration of this embodiment. By fabricating the WDM coupler directly in phosphosilicate fiber, losses are further reduced by the elimination of splices.

In summary, it can be seen that the laser of Figure 9 has a relatively small number of components, few splices and low loss.

In use, the 1060 nm pump light generates Raman gain not only at 1240 nm from the 1330 cm⁻¹ Raman shift, but also at around 1115 nm from the 450 cm⁻¹ Raman shift familiar from silica (see Figure 7). In use, by virtue of the parameters of the WDM coupler, the 1240 nm light generated by the Raman gain at this wavelength will stay in the loop of the ring waveguide while any remaining 1060 nm light couples out of the loop. Thus, loop losses at 1240 nm are small allowing power to build up at this wavelength. At the same time, loop losses at 1115 nm should be high to suppress the build up of unwanted energy at that wavelength from the 450 cm⁻¹ Raman scattering. This can be automatically achieved with phosphosilicate waveguide material as now explained.

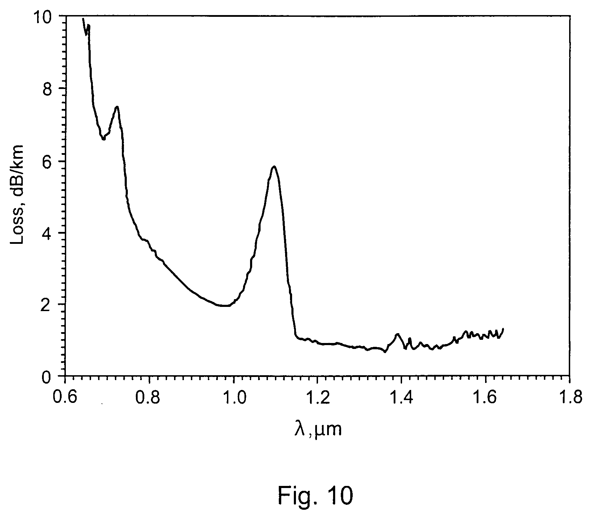

Figure 10 shows a loss spectrum measured in an exemplary phosphosilicate fiber. As evident, the loss at 1115 nm is over 5dB/km, while the loss at 1240 nm is less than 1dB/km. Depending on various detailed design factors of the laser such as the fiber length, this loss difference may be sufficient on its own to suppress unwanted oscillation at 1115 nm. The loss difference between these two wavelengths can be increased further if needed by suitable design of the WDM coupler, which can be made with a desired wavelength selectivity to enhance losses at 1115 nm. For example, the WDM coupler may be provided with sinusoidal cross-coupling characteristics, in this case between 1060 nm and 1240 nm. The out-coupling at 1115 nm would be around 75% resulting in a loop loss of 6dB at this wavelength. This level of excess loss will normally be enough to suppress oscillations at 1115 nm, thus allowing energy to build up at the desired 1240 nm without competition.

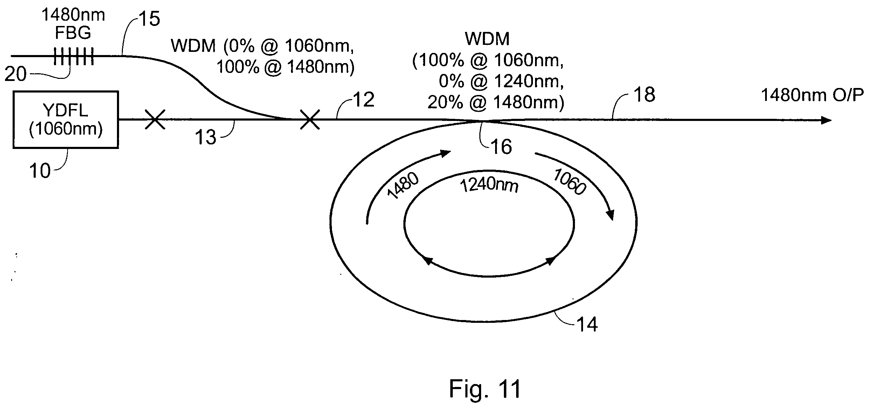

Figure 11 shows a laser according to a second embodiment. This laser is similar to the laser of the first embodiment, differing only in respect of the 1480 nm FBG 20 which is arranged out of the path of the pump laser 10 in a branch waveguide 15 with a three-way wavelength selective WDM coupler 13, which may be a fused taper coupler. The WDM coupler 13 serves to combine the 1060 nm pump beam and light reflected from the 1480 nm FBG 20, as well as to divert 1480 nm light emitted from the ring waveguide 14 to the FBG 20. This is achieved by being manufactured to couple substantially all 1480 nm light into the branch waveguide 15, and substantially no light at 1060 nm into the branch waveguide 15, as indicated by the labeling in the figure. The 1480 nm FBG 20 is thus removed from exposure to the pump laser beam, reducing the possibility of damage, and more generally relaxing the design constraints of this component in that its properties at the pump wavelength become irrelevant. For example, by contrast to the FBG 20 of the first embodiment, no transmission at the pump wavelength is required. With the arrangement of the second embodiment, the FBG 20 may be replaced with any kind of reflector, for example a mirror.

In both the first and second embodiments, the power circulating in the ring waveguide at 1240 nm creates Raman gain at both 1480 nm from the 1330 cm⁻¹ Raman line as well as at around 1310 nm from the 450 cm⁻¹ Raman line. By contrast to the first Raman step from 1060 nm, the phosphosilicate fiber does not itself provide significant differential loss between these two competing processes. Furthermore, if the WDM coupler 16 is of a conventional fused fiber wavelength-selective type, it cannot easily be made both to efficiently prevent light of around 1310 nm from oscillating in the loop and to allow the 1240 nm light to oscillate as required. The broadness of the Raman gain peak at 450 cm⁻¹ (which in reality extends over 100 cm⁻¹ or more) also dictates against any differential loss effect being provided by the manufacture of the fused coupler. The competing scattering processes from 1240 nm arising from the 450 and 1330 cm⁻¹ lines can be seen by comparison with Figures 7 and 8. It is therefore preferable to provide some way of suppressing the 1310 nm light so as to ensure that the loop preferentially generates 1480 nm light through the 1330 cm⁻¹ Raman scattering from 1240 nm.

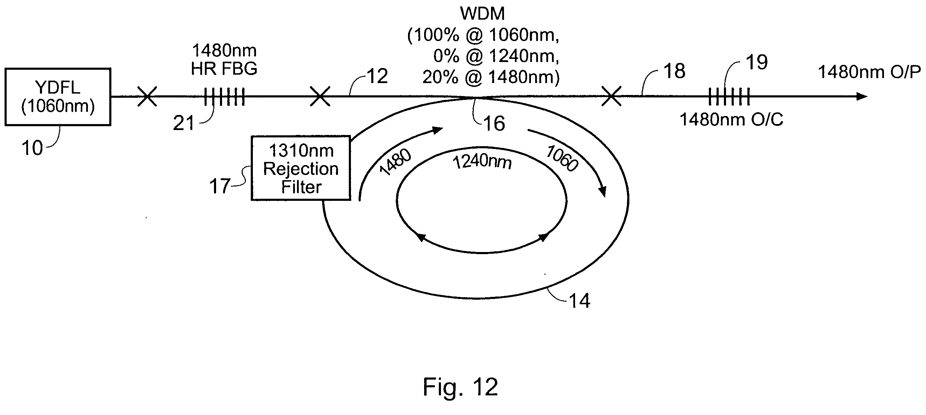

Figure 12 shows a laser according to a third embodiment of the invention which incorporates one way of suppressing the 1310 nm light so as to promote the desired 1330 cm⁻¹ Raman scattering from 1240 nm. A YDFL 10 is connected to an input waveguide 12 which leads to a WDM coupler 16. The WDM coupler 16 joins the input waveguide 12 to an output waveguide 18 and first and second ends of a ring waveguide 14 comprising phosphosilicate. The WDM coupler is fabricated with the transmission characteristics shown by the figure labeling. Namely, the WDM coupler is manufactured: (i) to couple substantially all the light at the pump wavelength of 1060 nm from the input waveguide into the ring waveguide; (ii) to couple substantially none of the light at the intermediate gain wavelength of 1240 nm out of the ring waveguide; and (iii) to couple substantially all of light at the emission wavelength out of the ring waveguide into the output waveguide.

To form a laser cavity at the emission wavelength (1480 nm) there is provided a pair of high reflectivity 1480 nm FBGs 19 and 21. The 1480 nm FBG 21 is arranged in the input waveguide 12 to form the back reflector of the laser cavity. The back-reflector FBG 21 will typically have a reflectivity of 99%. More generally, its reflectivity will be chosen so that reflection losses are negligible compared with other device losses. The 1480 nm FBG 19 is arranged in the output waveguide 18 for form the output coupler of the laser cavity. The output-coupler FBG 19 will typically have a reflectivity of 50%. A linear laser cavity at the emission wavelength is thus formed external to the ring waveguide 14. (This contrasts to the first and second embodiments where the laser cavity is a ring cavity formed by the ring waveguide). The ring waveguide 14 forms a cavity at the intermediate gain wavelength (1240 nm) by virtue of the transmission characteristics of the WDM coupler 16 at the gain wavelength. (This is similar to the first and second embodiments).

The laser of the third embodiment further comprises a 1310 nm rejection filter 17 arranged in the ring waveguide 14. With reference to Figure 7, it can be seen that 1310 nm corresponds to one Stokes shift from the gain wavelength (1240 nm) for the 450 cm⁻¹ silica Raman scattering line. The 1310 nm rejection filter 17 thus suppresses the 1310 nm radiation from building up in the loop. The rejection filter 17 has a low loss at 1240 nm (the gain wavelength) as well as at 1480 nm (the emission wavelength). The rejection filter 17 may be realized as a fused fiber coupler, for example. The rejection filter is preferably arranged towards the end of the ring waveguide loop (as viewed for the pump radiation) as illustrated. With this positioning, the pump beam (1060 nm) has already been substantially fully absorbed before arriving at the rejection filter. Consequently, the properties of the rejection filter at the pump wavelength are unimportant which removes one design constraint from the rejection filter. By including a rejection filter to suppress gain from 450 cm⁻¹ Raman scattering from the gain wavelength, it is no longer a requirement of the laser that the Raman gain in the loop for 1330 cm⁻¹ scattering from the gain wavelength (i.e. at 1480 nm) exceeds that for 450 cm⁻¹ scattering from the gain wavelength (i.e. at 1310 nm). It is enough if the Raman gain, less losses, is higher at 1330 cm⁻¹ than at 450 cm⁻¹.

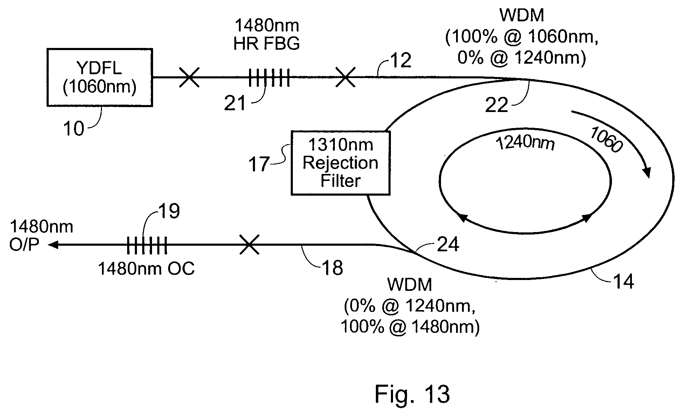

Figure 13 shows a laser according to a fourth embodiment. The laser comprises a YDFL 10 for emitting a 1060 nm pump beam. The laser's emission wavelength is 1480 nm, and its intermediate pump/gain wavelength (first Stokes wavelength) is 1240 nm, as illustrated by the process of Figure 6. The pump laser 10 supplies its pump beam into an input waveguide 12. A 1480 nm FBG 21 is arranged in the input waveguide to provide a back reflector for a laser cavity at the emission wavelength. The input waveguide 12 leads to a WDM input coupler 22 which is a three-way coupler coupling the input waveguide 12 into a ring waveguide 14 for providing Raman gain. At least a part of the ring waveguide 14 is phosphosilicate. Preferably the whole of the ring waveguide is phosphosilicate. The specifications of the WDM input coupler 22 are as stated in the figure. Namely, the WDM input coupler 22 is manufactured to couple substantially all the light at the pump wavelength of 1060 nm from the input waveguide into the ring waveguide 14 and to couple substantially none of the light at the intermediate gain wavelength of 1240 nm out of the ring waveguide 14. The properties of the WDM input coupler 22 at the emission wavelength are not relevant for this embodiment. Light at the emission wavelength is coupled out of the ring waveguide with a WDM output coupler 24 which is a three-way coupler coupling the ring waveguide 14 into an output waveguide 18. Arranged in the output waveguide 18 there is provided a 1480 nm FBG 19 which constitutes an output coupler for the laser, forming a linear cavity with the 1480 nm FBG 21 in the input waveguide 21. The cavity is thus formed external to the ring waveguide 14 in this embodiment.

The specifications of the WDM output coupler 24 are as stated in the figure. Namely, the WDM output coupler 24 is manufactured to couple substantially all the light at the emission wavelength of 1480 nm out of the ring waveguide 14 into the output waveguide 18 and to couple substantially none of the light at the intermediate gain wavelength of 1240 nm out of the ring waveguide 14. The properties of the WDM input coupler 22 at the pump wavelength 1060 nm are not critical, but it is preferable for the 1060 nm properties to be the same as the 1240 nm properties.

Moreover, this embodiment includes a rejection filter 17 arranged towards the end of the loop after the WDM output coupler 24 to suppress 1310 nm light. In this embodiment, because the 1480 nm light does not pass through the 1310 nm rejection filter, only the loss characteristics at 1310 nm and 1240 nm are important. The fewer number of requirements that need to be fulfilled by this rejection filter the easier it is to realize a suitable filter, so that overall performance can be improved. The filter may be a fused fiber coupler. Alternatively, it can be a praseodymium-doped fiber, which, with appropriate co-dopants, can exhibit significant attenuation at 1310 nm while the loss at 1240 nm remains low. FBGs can also be used as 1310 nm rejection filters.

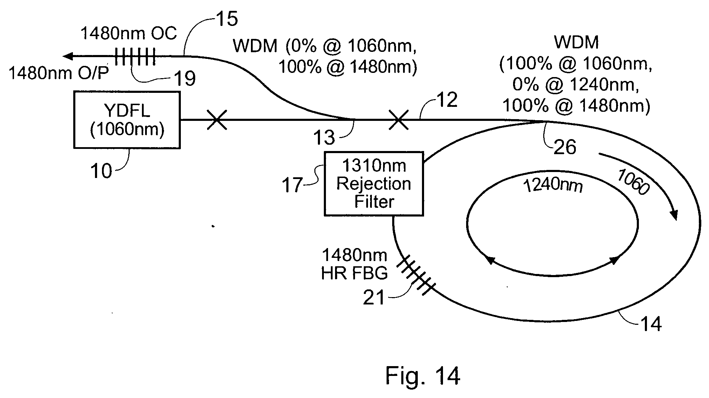

Figure 14 shows a laser according to a fifth embodiment. The laser comprises a YDFL 10 for emitting a 1060 nm pump beam. The laser's emission wavelength is 1480 nm, and its gain wavelength is 1240 nm, as illustrated by the process of Figure 6. The pump laser 10 supplies its pump beam into an input waveguide 12. A 1480 nm FBG 19 is arranged in a branch waveguide 15 joined to the input waveguide 12 by a WDM coupler 13. The FBG 19 forms an output coupler for the laser cavity at the emission wavelength. The WDM coupler 13 is a three-way coupler fabricated to couple all light at the emission wavelength of 1480 nm from the input waveguide 12 to the branch waveguide 15 and substantially none of the pump light at 1060 nm out of the input waveguide 12.

The input waveguide 12 leads to a WDM input coupler 26 which is a three-way coupler coupling the input waveguide 12 into a ring waveguide 14 for providing Raman gain. At least a part of the ring waveguide 14 is phosphosilicate. Preferably the whole of the ring waveguide is phosphosilicate. The specifications of the WDM input/output coupler 26 are as stated in the figure. Namely, the WDM input/output coupler 26 is manufactured to couple substantially all the light at the pump wavelength of 1060 nm from the input waveguide 12 into the ring waveguide 14; to couple substantially none of the light at the intermediate gain wavelength of 1240 nm out of the ring waveguide 14; and to couple substantially all of the light at the emission wavelength out of the ring waveguide 14.

Arranged in the ring waveguide 14 there is provided a 1480 nm FBG 21 which constitutes a back reflector for the laser, forming a linear cavity with the 1480 nm FBG 19 in the branch waveguide 15. The laser cavity is thus formed in part external and in part internal to the ring waveguide 14 in this embodiment.

Moreover, this embodiment includes a rejection filter 17 arranged towards the end of the loop after the 1480 nm FBG 21 to suppress 1310 nm light. In this embodiment, because the 1480 nm light does not pass through the 1310 nm rejection filter, only the loss characteristics at 1310 nm and 1240 nm are important. Similar comments apply as those made previously.

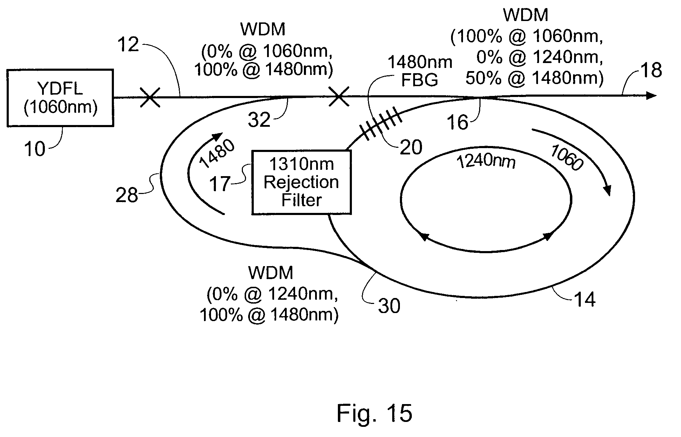

Figure 15 shows a laser according to a sixth embodiment. The laser comprises a YDFL 10 for emitting a 1060 nm pump beam. The laser's emission wavelength is 1480 nm, and its gain wavelength is 1240 nm, as illustrated by the process of Figure 6. The pump laser 10 supplies its pump beam into an input waveguide 12.

The input waveguide 12 leads to a WDM input coupler 16 which is a four-way coupler coupling the input waveguide 12 into a ring waveguide 14 for providing Raman gain. At least a part of the ring waveguide 14 is phosphosilicate fiber. Preferably the whole of the ring waveguide is phosphosilicate. The specifications of the WDM coupler 16 are as stated in the figure. Namely, the WDM coupler 16 is manufactured to couple substantially all the light at the pump wavelength of 1060 nm from the input waveguide 12 into the ring waveguide 14; to couple substantially none of the light at the intermediate gain wavelength of 1240 nm out of the ring waveguide 14; and to couple a fraction (shown as 50% in the figure) of the light at the emission wavelength out of the ring waveguide 14.

A rejection filter 17 is arranged towards the end of the loop to suppress 1310 nm light. Positioned in the loop after the rejection filter 17 there is a 1480 nm FBG 20 for making the ring uni-directional at the emission wavelength.

A WDM spur input coupler 30 is arranged part way around the ring waveguide 14 to couple out light at the emission wavelength into a spur waveguide 28 which rejoins the input waveguide 12 at a further WDM coupler 32, referred to as a spur output coupler in the following.

The specifications of the WDM couplers 30 and 32 are as stated in the figure. Namely, the WDM coupler 30 is manufactured to couple substantially none of the light at the intermediate gain wavelength of 1240 nm out of the ring waveguide 14 and to couple substantially all of the light at the emission wavelength out of the ring waveguide 14 into the spur waveguide 28.

Moreover, the WDM coupler 32 is manufactured to couple substantially none of the light at the pump wavelength of 1060 nm out of the input waveguide 12 and to couple substantially all of the light at the emission wavelength from the spur waveguide 28 into the input waveguide 12.

In this embodiment, the laser cavity is thus formed by a ring about the 4-way WDM coupler 16 encompassing a first section of the ring waveguide 14 (from the WDM coupler 16 to the WDM coupler 30), a second section made up of the spur waveguide 28 and a third section made up of that part of the input waveguide 12 extending between the 3-way WDM coupler 32 and the 4-way WDM coupler 16.

An isolator (not shown) may be placed in the output waveguide 18 to avoid spurious reflections and make the laser more stable.

### 1060 nm Pumped 1480 nm Output ASE Embodiments

The configurations shown so far use a resonant cavity at 1480 nm in order to generate laser emission at an emission wavelength of 1480 nm. Alternatively, we can use sources that are not resonant at 1480 nm, but generate high-power amplified stimulated emission (ASE) at that wavelength. A specific advantage of ASE sources is that they are often more stable than lasers, especially single-pass ASE-sources. The following embodiments relate to such ASE sources.

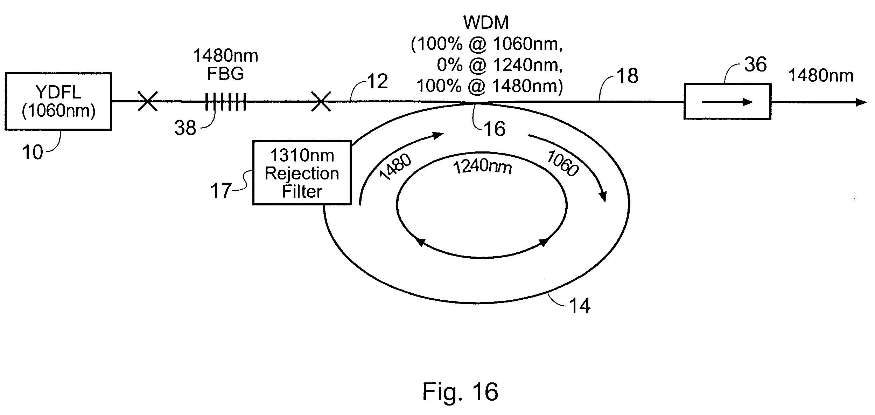

Figure 16 shows an ASE source according to a seventh embodiment of the invention. A YDFL 10 is connected to an input waveguide 12 which leads to a WDM coupler 16. The WDM coupler 16 joins the input waveguide 12 to an output waveguide 18 and first and second ends of a ring waveguide 14 comprising phosphosilicate. The WDM coupler 16 is fabricated with the transmission characteristics shown by the figure labeling. Namely, the WDM coupler is manufactured: (i) to couple substantially all the light at the pump wavelength of 1060 nm from the input waveguide into the ring waveguide; (ii) to couple substantially none of the light at the intermediate gain wavelength of 1240 nm out of the ring waveguide; and (iii) to couple substantially all of light at the emission wavelength out of the ring waveguide into the output waveguide.

There is provided a 1480 nm FBG 38 in the input waveguide 12. The 1480 nm FBG is used to double-pass light at the emission wavelength through the ring waveguide 14 and reduce the gain requirements. In other words, light at the emission wavelength output from the ring waveguide 14 towards the pump source 10 is reflected back into the ring waveguide 14 for a second pass. The reflection spectrum of the 1480 nm grating may advantageously be broad enough (e.g., 10-30 nm, more especially about 20 nm) to cover the gain bandwidth of the phosphosilicate fiber around 1480 nm. A reflectivity of 10% or even less is enough to make the output substantially uni-directional, provided that sufficiently high gain is attained, as is required for an efficient ASE source. However, a higher reflectivity reduces the gain requirements, which is preferable.

The ring waveguide 14 forms a ring cavity at the intermediate gain wavelength (1240 nm) by virtue of the transmission characteristics of the WDM coupler 16 at the gain wavelength. (This is similar to the previous laser embodiments). However, in contrast to the preceding laser embodiments, there is no cavity at the emission wavelength for the ASE source of this embodiment. A 1480 nm isolator 36 is arranged in the output waveguide 18 to increase stability.

A 1310 nm rejection filter 17 is provided in the loop formed by the ring waveguide 14, the role of which will be understood from the above described embodiments. The loss of the 1310 nm rejection filter should be low at 1480 nm and especially at 1240 nm.

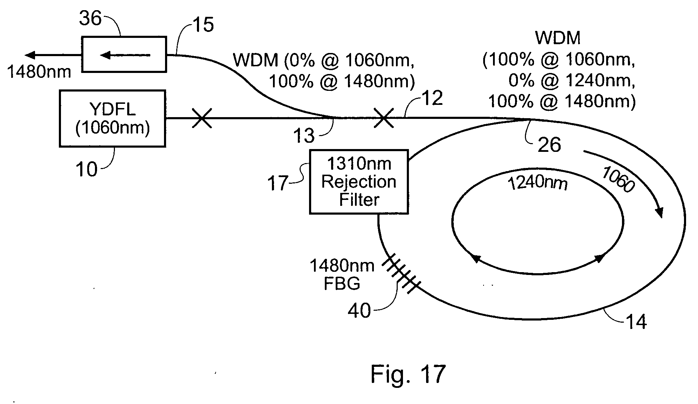

Figure 17 shows an ASE source according to an eighth embodiment of the invention. This ASE source is structurally similar to the laser embodiment of Figure 14, with the exception that: (i) the high-reflectivity (preferably narrow band) FBGs of the laser embodiment are removed and replaced with a broadband high-reflectivity FBG 40 in the ring waveguide 14 which is similar to the FBG 38 of the ASE source of Figure 16; and (ii) the output coupler FBG 19 is replaced with an isolator 36 (which is not essential but improves stability). With this embodiment, light at the emission wavelength of 1480 nm does not need to pass through the 1310 nm rejection filter, which therefore may be lossy at 1480 nm.

### Seeded MOPA Embodiments

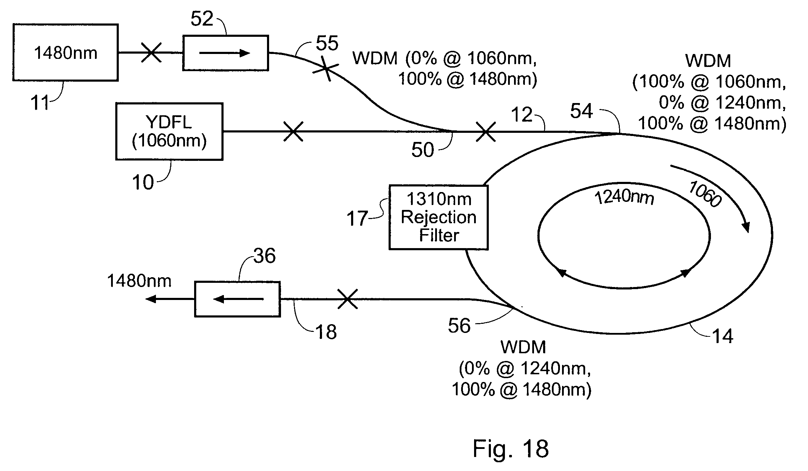

Figure 18 shows a master oscillator power amplifier (MOPA) according to a 9th embodiment of the invention. This device is an amplifier of 1480 nm input radiation, where amplification takes place by stimulated Raman scattering from a 1060 nm pump source using the transitions illustrated in Figure 6.

Light at a seed wavelength equal to the emission wavelength of 1480 nm is provided by a seed source 11 which is arranged to deliver a seed beam to a branch waveguide 55 which also includes an isolator 52. The seed source 11 may be a laser diode of the type commonly used for pumping EDFAs which typically have output powers in the range 0.1 - 0.2 W. It is also possible to use other resonator-free 1480 nm sources in a MOPA configuration. The seed beam is combined with a pump beam in an input waveguide 12, the pump beam being provided by a 1060 nm pump source 10. The combination takes place using a WDM coupler 50 which is a three-way coupler having the transmission properties indicated by the figure labeling. Namely, the WDM coupler 50 is fabricated to transmit substantially all power at 1480 nm to the branch waveguide 55 and substantially none of the light at the pump wavelength to the branch waveguide 55. The isolator 52 suppresses any instability arising from 1480 nm reflections into the branch waveguide 55. A further 3-way WDM coupler 54 delivers the combined pump and seed beams into a phosphosilicate ring waveguide 14. The WDM coupler 54 is fabricated having the transmission properties indicated by the figure labeling. Namely, the WDM coupler 54 is fabricated to transmit substantially all power at the pump and seed wavelengths from the input waveguide 12 into the ring waveguide 14 and substantially none of the light at the intermediate gain wavelength out of the ring waveguide 14. To couple out light at the seed/emission wavelength, a further WDM coupler 56 is provided in the loop formed by the ring waveguide 14 towards the end of the loop to allow sufficient propagation path for amplification of the seed beam into the emission beam. The WDM coupler 56 serves to couple out the emission beam from the ring waveguide 14 into an output waveguide 18. This is achieved by fabricating the WDM coupler 56 with the transmission properties indicated by the figure labeling. Namely, the WDM coupler 56 is fabricated to transmit substantially all power at the seed/emission wavelength out of the ring waveguide 14 and into the output waveguide 18 and substantially none of the light at the intermediate gain wavelength out of the ring waveguide 14.

In the loop subsequent to the WDM coupler 56 there is provided a 1310 nm rejection filter 17, the role of which will be understood from the above described embodiments. As in the ASE source embodiments, an isolator 36 is provided in the output waveguide 18 to improve stability.

An advantage of using a seeded design, such as the above described MOPA, is that this reduces the gain requirements and thus the pump requirements for the 1480 nm source in comparison to an unseeded ASE source. It is also possible to use the MOPA as an amplifier for an external, low-power 1480 nm source, such as the above-mentioned laser diodes.

It will be appreciated that the design of the present embodiment constitutes a single-pass configuration. In other words, 1480 nm radiation is injected into the phosphosilicate gain medium and passes through it once, being amplified along the way by stimulated Raman scattering from the 1240 nm radiation, before being output from the gain medium.

In general, the MOPA proposed above, and those about to be described, are attractive because of their stability, wavelength control, and potential for temporal control (modulation).

With a 100 mW laser diode as the 1480 nm seed source, a gain of 10 dB is sufficient to reach an output power of 1 W with the fiber used. This gain corresponds to ∼0.6 W of absorbed 1240 nm power with polarization-matched pumping, and twice as much power with random polarization.

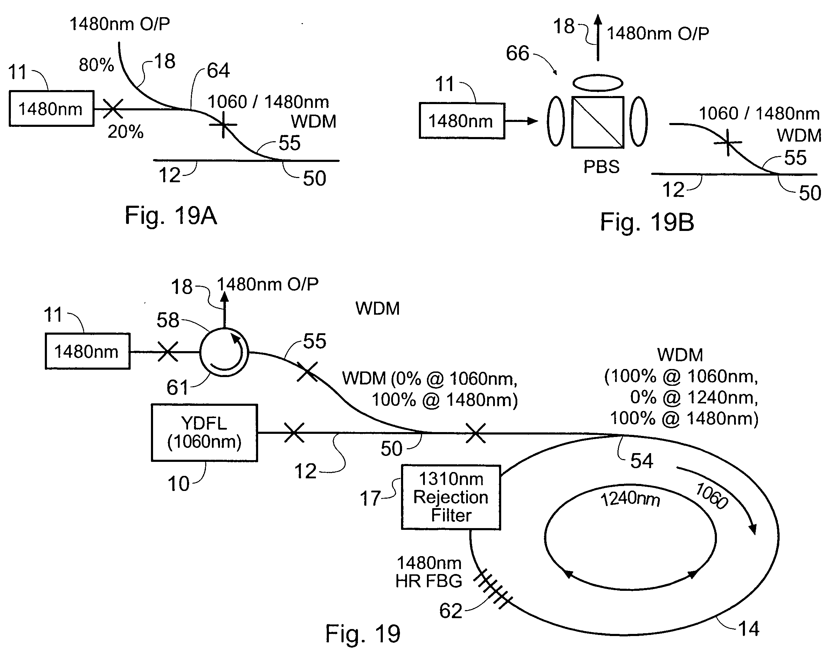

Figure 19 shows another MOPA according to an 10th embodiment of the invention. This device is an amplifier of 1480 nm input radiation, where amplification takes place by stimulated Raman scattering from a 1060 nm pump source using the transitions illustrated in Figure 6.

Light at a seed wavelength equal to the emission wavelength of 1480 nm is provided by a seed source 11 which is arranged to deliver a seed beam to a branch waveguide 55 which also includes a circulator 61. The seed source 11 may be a laser diode of the type commonly used for pumping EDFAs. It is also possible to use other resonator-free 1480 nm sources in a MOPA configuration. The seed beam is combined with a pump beam in an input waveguide 12, the pump beam being provided by a 1060 nm pump source 10. The combination takes place using a WDM coupler 50 which is a three-way coupler having the transmission properties indicated by the figure labeling. Namely, the WDM coupler 50 is fabricated to transmit substantially all power at 1480 nm to the branch waveguide 55 and substantially none of the light at the pump wavelength to the branch waveguide 55. A further 3-way WDM coupler 54 delivers the combined pump and seed beams into a phosphosilicate ring waveguide 14. The WDM coupler 54 is fabricated having the transmission properties indicated by the figure labeling. Namely, the WDM coupler 54 is fabricated to transmit substantially all power at the pump and seed wavelengths from the input waveguide 12 into the ring waveguide 14 and substantially none of the light at the intermediate gain wavelength out of the ring waveguide 14.

To reflect light at the seed/emission wavelength through the ring waveguide for a second pass, a 1480 nm high reflectivity FBG 62 is arranged in the loop formed by the ring waveguide 14 towards the end of the loop. In use 1480 nm light is thus amplified as it passes around the ring in a clockwise direction (as illustrated) and then further amplified after reflection from the FBG 62 as it passes around the ring in a counterclockwise direction (as illustrated). After the second pass, the amplified 1480 nm radiation is routed to the branch waveguide 55 by the WDM couplers 54 and 50 and then to an output waveguide which is arranged as a third port of the circulator 58.

In the loop subsequent to the 1480 nm FBG 62 there is also provided a 1310 nm rejection filter 17, the role of which will be understood from the above described embodiments.

It will be appreciated that the design of the present embodiment constitutes a double-pass configuration. In other words, 1480 nm radiation is injected into the phosphosilicate gain medium and passes through it a first time, being amplified along the way by stimulated Raman scattering from the 1240 nm radiation, and then a second time after reflection by the 1480 nm FBG 62, before being output from the gain medium via the circulator 61 and output waveguide 18. An advantage of the double pass configuration is that it reduces the gain requirements by about one half in comparison to a single pass configuration.

Figures 19A and 19B show two variants of the output coupling arrangement used in the MOPA of Figure 19 in which the circulator is replaced with other output coupling arrangements. These alternatives may be advantageous, since current optical circulators are relatively lossy and, in general, cannot handle high powers.

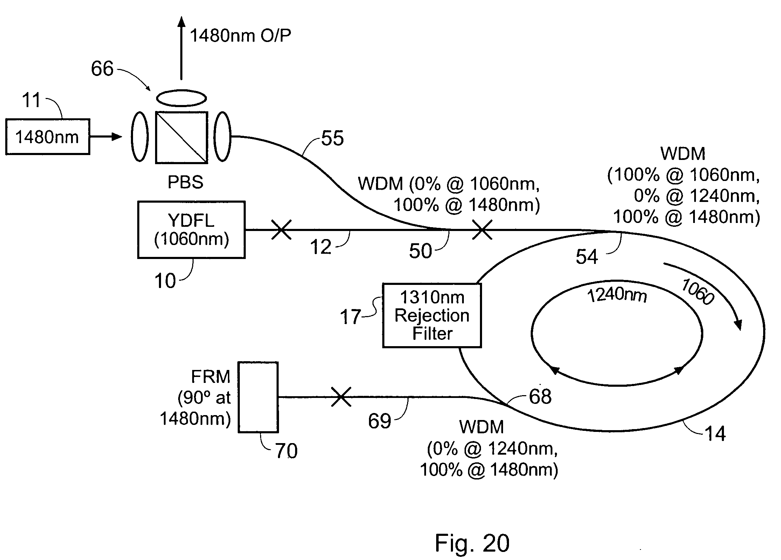

Figure 19A shows the output waveguide 18 being connected to the branch waveguide 55 by a 3-way WDM coupler 64, the other terminal of which leads to the output of the seed source 11. The WDM coupler 64 may be a simple fused fiber coupler. In this case, a 20% coupler is used, that is 20% of light at 1060 nm and 1480 nm output from the ring waveguide 14 are directed back to the seed source 11 and 80% into the output waveguide 18. This would incur an insertion loss of 7 dB (excluding excess loss) for the injected seed, and a loss of ∼1 dB for the output beam (excluding excess loss). Generally, the coupler 64 will be made lossier for the seed source than the output coupling route since the power budget of the seed source will in general be less critical. A further WDM coupler 50 is provided as in the embodiment of Figure 20, providing 100% coupling at 1480 nm from the input waveguide 12 to the branch waveguide 55, and 0% coupling at 1060 nm.

Figure 19B illustrates another input/output coupling arrangement. In this case, a polarization-dependent beam-splitter 66 is used in place of the circulator. The beamsplitter may reflect, for instance, 60% of one polarization and 100% of the other polarization. For launching light, the polarizing beam-splitter inflicts a loss of around 60% (4 dB), as 1480 nm diodes are generally polarized. For out-coupling the light, the beamsplitter inflicts a loss of 20% (1 dB), if we assume that the returning, amplified, 1480 nm light is randomly polarized. Thus, because the launched light is polarized and because the returning light is typically randomly polarized, it is possible to launch light via a polarization-dependent beamsplitter and reduce the gain requirements (in this case by ∼3 dB) and / or the output coupling losses.

Since the Raman gain is polarization-dependent, it is possible to improve the efficiency of the present embodiment, and also the other ASE, MOPA and laser embodiments, by using polarization-preserving fibers and components.

Figure 20 shows a double pass MOPA according to an 11th embodiment of the invention. This embodiment may be considered as a modification of the MOPA of Figure 19B in that the 1480 nm FBG in the loop is replaced with a WDM coupler 68, spur waveguide 69 and a Faraday rotating mirror (FRM) 70 arranged at the end of the spur waveguide 69. The WDM coupler 68 has the transmission properties indicated by the figure labeling. Namely, the WDM coupler 68 is fabricated to transmit substantially all power at the seed/emission wavelength out of the ring waveguide 14 and into the spur waveguide 69 and substantially none of the light at the intermediate gain wavelength out of the ring waveguide 14.

In use, the FRM rotates the orientation of the polarization axis of a linearly polarized beam by 90°. Other polarization states are also rotated so that they emerge in an orthogonal state relative to the input polarization. It is well known that the orthogonality of incident and reflected polarizations is maintained throughout the fiber. The light can be made to return in an orthogonal polarization compared to the launched polarization. Thus, a polarizing beam-splitter can be used for launching and coupling out 1480 nm light from the amplifier, to provide a two-pass MOPA with in theory no polarization loss in the output-coupling polarizer.

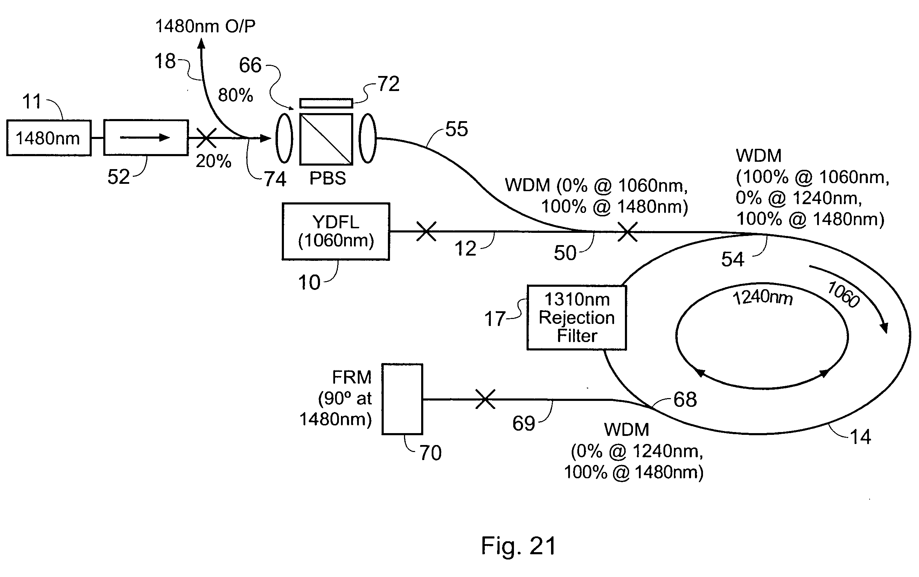

Figure 21 shows a MOPA according to a 12th embodiment of the invention which may be viewed as a development of the MOPA of Figure 20. One output of the PBS 66 is modified by replacing the output waveguide with a mirror or other reflector that is reflective at 1480 nm. The path from the seed source 11 to the PBS 66 is also modified by the addition of a 3-way coupler 74 similar to the coupler of the Figure 19A embodiment. An isolator 52 is also included in the output path from the seed source 11.

In use, the four-pass MOPA of Figure 21 functions as follows. Light is injected from the 1480 nm seed source via an isolator 52 and an 80 / 20% coupler 74 (similar to the Figure 19A embodiment). Other coupler ratios are also possible. The optimum ratio depends on parameters such as the amount of Raman gain, power of seed source, and pump power. The output from a diode is typically largely linearly polarized. With special measures (the use of polarization-preserving components or the use of polarization controlling equipment), the polarization of the light can remain linear with proper orientation to pass through the polarization beamsplitter with a low loss.

The 1480 nm seed beam then enters the Raman gain fiber 14 via the 1060 / 1480 nm WDM coupler 50 that combines the seed beam with a 1060 nm pump and via a second coupler. The 1480 nm seed beam is amplified in the Raman gain fiber 14, pumped by an intermediate beam at 1240 nm that is generated via stimulated Raman scattering from the 1060 nm pump beam and that is resonating in a Raman ring resonator, formed by the ring waveguide (i.e. Raman gain fiber) 14 and said second WDM coupler 54. The Raman ring resonator contains a filter 17 that suppresses oscillation around 1310 nm towards the "end" of the loop. Before the filter, the 1480 nm beam is coupled out from the loop in a wavelength-selective coupler 68 to a spur waveguide 69. The 1480 nm beam is then reflected by the FRM 70 and travels back into the Raman gain fiber towards the seed launch point. However, because the polarization in this second pass is now rotated to an orthogonal state, the beam is split off in the PBS 66 to a mirror 72 which is highly reflective at 1480 nm. The beam is then reflected back into the Raman ring resonator for a third pass, reaches the FRM 70, is reflected and returned in the orthogonal polarization, i.e., the same polarization that was initially injected into the amplifier through the PBS. Thus, after the fourth pass, the amplified 1480 nm beam is passed by the PBS 66 towards the seed source 11, where 80% is split off from the path with the 3-way coupler 74 as useful output into the output waveguide 18.

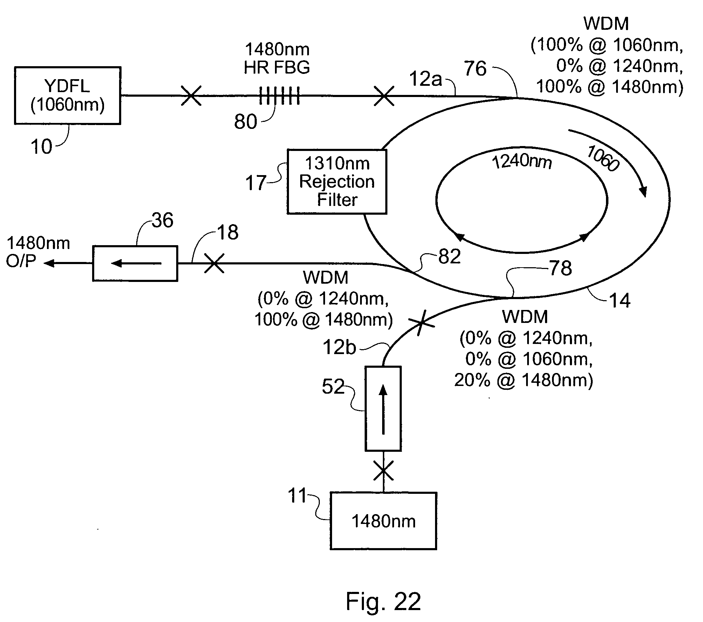

Figure 22 shows a double pass MOPA according to a 13th embodiment of the invention.

While passing the 1480 nm seed beam to be amplified several times through the phosphosilicate gain medium can reduce the single-pass gain requirements and thus the pump power requirements, the output coupling device (e.g., the 20 / 80% coupler in some of the previous embodiments) is lossy. This reduces the maximum output power. In order to reduce power losses in the input / output coupling in a multipass arrangement, it is proposed in this embodiment to launch the light (using an inherently lossy device, for instance a coupler with a 20 / 80% power splitting ratio at 1480 nm) at some mid-point into the Raman amplifier and then at an end-point couple out all of the 1480 nm power. This embodiment provides a possible configuration for double-passed amplification based on this idea.

A YDFL pump source 10 is arranged to inject a pump beam through an pump input waveguide 12a into a ring waveguide 14 through a WDM coupler 76 which is a 3-way coupler. The input waveguide further includes a high reflectivity 1480 nm FBG 80, the role of which is explained further below. The WDM coupler 76 is fabricated having the transmission properties indicated by the figure labeling. Namely, the WDM coupler 76 is fabricated to transmit (i) substantially all power at the pump wavelength from the pump input waveguide 12a into the ring waveguide 14; (ii) substantially none of the light at the intermediate gain wavelength out of the ring waveguide 14; and (iii) substantially all the power at the seed/emission wavelength out of the ring waveguide 14 into the pump input waveguide 12a.

Instead of injecting the seed beam into the ring waveguide with the pump beam, in this embodiment, the seed beam is injected separately into the ring waveguide in a direction that is counterpropagating in relation to the injection direction of the pump beam. Namely, a seed source 11 of 1480 nm radiation is connected to a seed input waveguide 12b which leads via an isolator 52 to a 3-way WDM coupler 78 which couples the seed beam into the ring waveguide 14. The WDM coupler 78 is fabricated having the transmission properties indicated by the figure labeling. Namely, the WDM coupler 78 is fabricated to transmit (i) substantially none of the light at the intermediate gain wavelength or pump wavelength out of the ring waveguide 14; and (ii) a fraction (indicated as 20% in the figure) of the power at the seed/emission wavelength propagating in the pump injection direction out of the ring waveguide 14 into the seed input waveguide 12b.

Further around the ring waveguide 14, as viewed in the pump injection direction (clockwise in the figure) a 3-way WDM coupler 82 is provided to couple out the emission beam into an output waveguide 18 which also includes an isolator 36. The WDM coupler 82 is fabricated having the transmission properties indicated by the figure labeling. Namely, the WDM coupler 82 is fabricated to transmit (i) substantially none of the light at the intermediate gain wavelength out of the ring waveguide 14; and (ii) substantially all of the light at the seed/emission wavelength out of the ring waveguide 14.

Still further around the ring waveguide 14, as viewed in the pump injection direction there is provided a 1310 nm rejection filter 17, the role of which will be understood from the above described embodiments.

In use, the seed beam is injected into the ring waveguide 14. Any component of the seed beam, or amplified forward scattered component thereof, that reaches the WDM coupler 76 is coupled out of the ring waveguide into the pump input waveguide 80 whereupon it is reflected by the 1480 nm FBG 80 for a second pass around the ring waveguide 14, this time through to the output waveguide 18.

Although the full length of the Raman gain fiber is not double-passed in this arrangement, the gain in the fraction that is not double-passed can be made relatively small. An advantage of this approach is that the losses in the coupler only affect a fraction of the 1480 nm output power. The amount of phosphosilicate gain fiber that can be single-passed, rather than double-passed, depends on injected seed power, pump power, and other parameters.

### Embodiments with Alternative Seed Source Launch Configurations

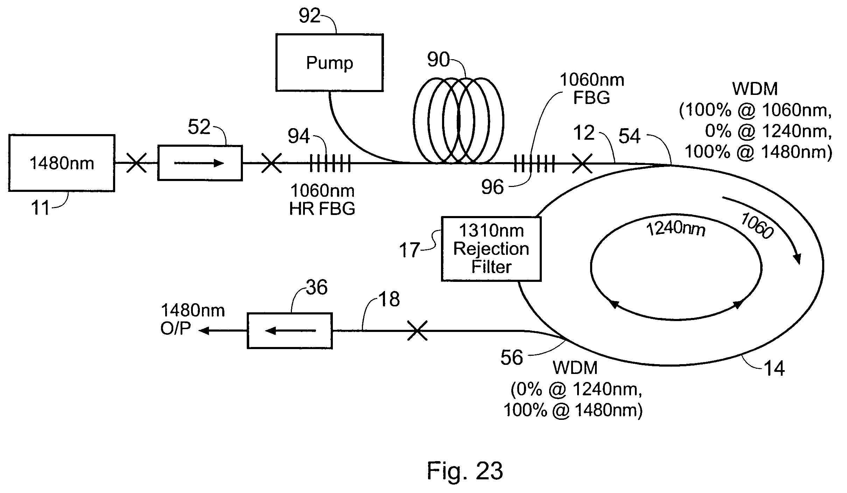

Figure 23 shows a single-pass MOPA according to an eighteenth embodiment. This design may be understood as a modification of that of Figure 18. The ring waveguide 14 and output side design of this embodiment is the same as that of Figure 18. However, the input side design differs in that the 1480 nm seed source 11 is supplied through the pump source components. An ytterbium-doped fiber laser (YDFL) using double-clad (DC) fiber is formed of a back reflector 94 and output coupler 96 which are high reflectivity FBGs arranged in the input waveguide 12 leading from the seed source 11 (via an isolator 52). The FBGs 94 and 96 have arranged between them a section of ytterbium-doped DC fiber 90 which is pumped by a pump source 92. The pump light is shown as being injected into the input waveguide 12 with a 3-way coupler.

An advantage of this embodiment is that components are placed where powers are low by launching the 1480 nm seed light through the 1060 nm YDFL. This means that it is no longer necessary to have a 1480 /1060 nm coupler in the high-power 1060 nm path. This approach can also be used with many other of the other embodiments described in this document.

As an alternative to what is illustrated, the 1060 nm YDFL is cladding-pumped by a multi-mode pump source that may be injected into the ytterbium-doped DC fiber via, e.g., a V-groove [3] or a side-spliced pump coupler [4]. These approaches leave the core of the ytterbium-doped DC fiber uninterrupted and free for splicing at both ends.

As with other embodiments, an intermediate 1240 nm pump beam is generated and oscillates in the ring resonator. The 1240 nm beam generates gain at 1480 nm. With a 0.2 W seed source and a 1 dB splice and component loss, a 1480 nm gain of 8 dB is enough to reach an output power of 1 W.

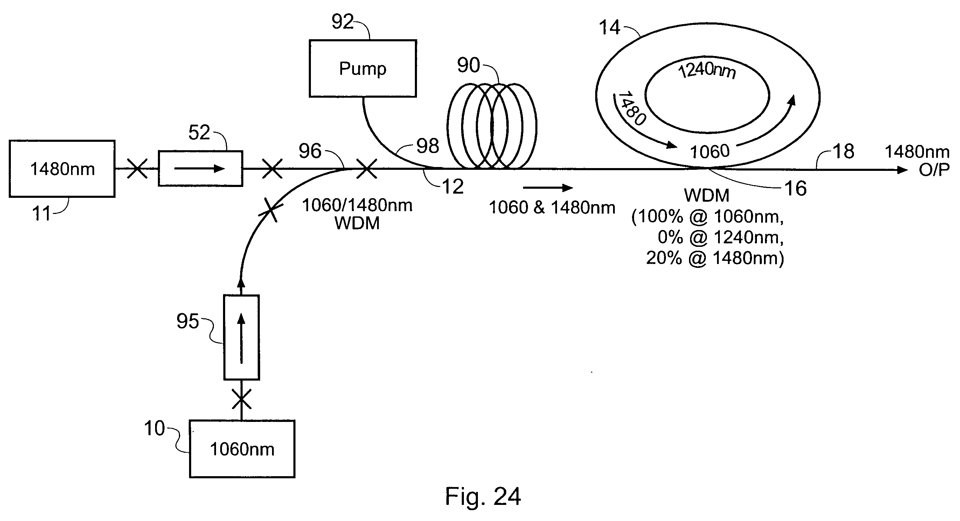

Figure 24 shows a single pass MOPA according to a further embodiment of the invention in which the reduction of the number of components in the high-power path is taken one step further.

A seed source 11 of 1480 nm light is arranged to supply a seed beam to an input waveguide 12 through an isolator 52. In the input waveguide 12 there is arranged a section of ytterbium-doped DC fiber 90 to provide gain for the seed beam. Gain is induced by a pump source 92 coupled into the input waveguide 12 by a coupler 98. A pump source 10 of 1060 nm light is arranged to supply a pump beam to the input waveguide 12 through an isolator 95 and WDM coupler 96 which is located prior to the DC gain fiber 90.

The input waveguide 12 then leads to a 1240 nm ring cavity formed by a WDM coupler 16 arranged to couple light into and out of a phosphosilicate ring waveguide 14, which may be optical fiber as shown schematically. The specifications of the WDM coupler 16 are as stated in the figure. Namely, the WDM coupler is manufactured to couple substantially all the light at the pump wavelength of 1060 nm from the input waveguide into the ring waveguide 14 and to couple substantially none of the light at the intermediate gain wavelength of 1240 nm out of the ring waveguide. Moreover, the WDM coupler 16 is manufactured to couple a fraction (stated to be 20% in the figure) of light at the emission wavelength out of the ring waveguide 14 into an output waveguide 18.

In this embodiment, it should be noted that wavelength selection can be primarily accomplished by the 1060 nm and 1480 nm seed sources (which need to be matched in wavelength). With the spectral properties of the ring cavity defined by the WDM coupler 16 and phosphosilicate of the ring waveguide 14, a broad or multipeaked reflectivity around 1240 nm is provided. This allows the emission wavelength of the source to be changed (e.g., to 1455 nm) by changing the wavelength of the 1060 nm (within the bandwidth of the YDFA, which may be quite broad) and/or the 1480 nm seed source. The limits of the range of wavelength tuning that is possible will probably be defined by the wavelength-dependence of the loss of the ring cavity.

### 1110-1120 nm Pumped Embodiments

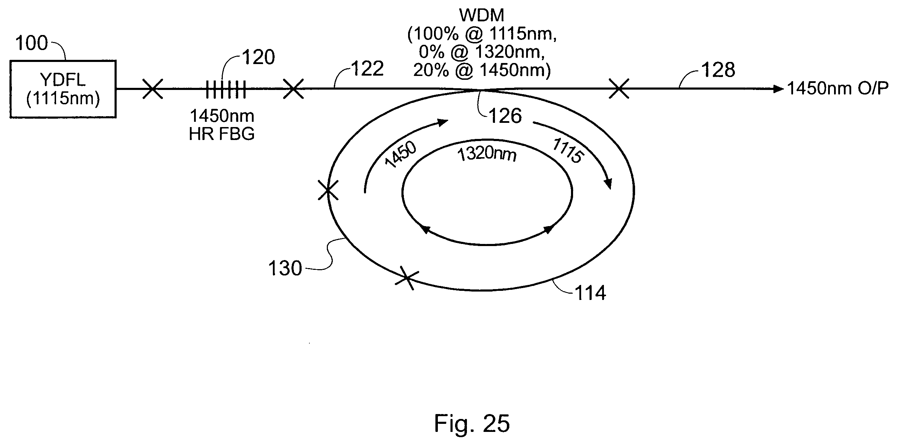

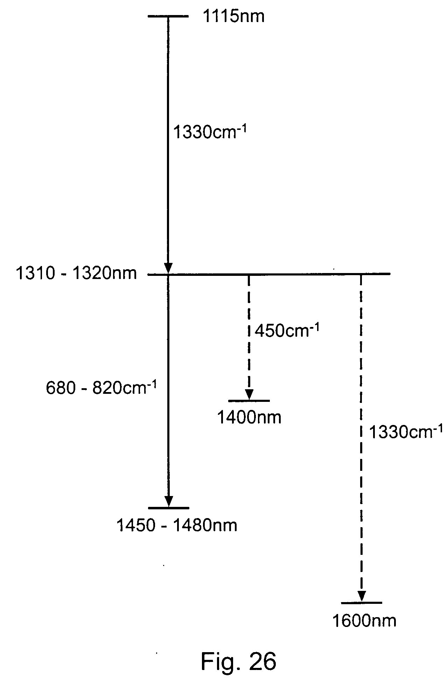

Figure 25 shows another embodiment of the invention which is a laser. The laser of this embodiment may be understood as the analog of the laser of Figure 9, but for the 2-step Raman process of Figure 26, rather than that of Figure 6.

Figure 26 shows how the transitions used by this device differ from those of the previous embodiments. The present device uses a 2-step Raman cascade process starting from 1110-1120 nm instead of 1060 nm. As an alternative to starting at a pump wavelength of 1060 nm and then using two 1330 cm⁻¹ Raman scattering steps to reach 1480 nm, it is proposed to start with a 1110- 1120 nm pump. (Cladding-pumped YDFLs can emit in this wavelength region). The pump beam is then Raman-shifted in a first Raman step by 1320 - 1340 cm⁻¹ to an intermediate gain wavelength of 1300 - 1320 nm. Then, in a second Raman step the light is Raman-shifted in the phosphosilicate fiber to 1450 - 1480 nm, by a Raman shift of around 680 - 820 cm⁻¹. As Figure 6 shows, the Raman gain in a phosphosilicate fiber is significant in the range 680 - 820 cm⁻¹. In the figure, the unwanted 450 and 1330 cm⁻¹ transitions from the gain wavelength are shown with dashed lines.

An advantage with this approach is that the emission wavelength can be determined in the second Raman step. In order to suppress Raman conversion at 450 cm⁻¹ and 1330 cm⁻¹, which have higher Raman gain, some wavelength selection is desirable.

The laser has an emission wavelength of 1450 nm, a pump wavelength of 1115 nm and a gain wavelength of 1320 nm as illustrated by the process of Figure 26. The 1450 nm laser comprises a pump source in the form of a YDFL 100 having an emission wavelength of 1115 nm as already mentioned. The pump laser 100 supplies its pump beam into an input waveguide 122. A 1450 nm HR FBG 120 is arranged in the input waveguide, the role of which is to ensure uni-directional output. Without this component the gain in the ring waveguide 14 would be equal in both directions. The FBG 120 breaks the symmetry by introducing an external reflection. The FBG 120 can be relatively weak, since only a small amount of imbalance is sufficient to force unidirectional output.

The input waveguide 122 leads to a WDM coupler 126 which is a four-way coupler coupling the input waveguide 122 to an output waveguide 128 and to two ends of a ring waveguide 114 for providing Raman gain. A part of the ring waveguide 114 is phosphosilicate fiber. The specifications of the WDM coupler 126 are as stated in the figure. Namely, the WDM coupler is manufactured to couple substantially all the light at the pump wavelength of 1115 nm from the input waveguide into the ring waveguide and to couple substantially none of the light at the intermediate gain wavelength of 1320 nm out of the ring waveguide. Moreover, the WDM coupler 126 is manufactured to couple a fraction (stated to be 20% in the figure) of light at the emission wavelength out of the ring waveguide 114 into the output waveguide 128. In this embodiment, the input, output and ring waveguides are conveniently made of optical fiber. However, other waveguides, for example planar waveguides could also be used.

The ring waveguide 114 comprises a section of fiber with OH⁻ impurity 130 to suppress unwanted emission at around 1380 - 1400 nm from 450 cm⁻¹ Raman scattering from the intermediate wavelength (see Figure 26). Gain at 1600 nm from 1330 cm⁻¹ Raman scattering from the intermediate wavelength is suppressed in the present embodiment by the ring resonator which is not resonant at 1600 nm. Alternatively, because the 1330 cm⁻¹ Raman peak is quite narrow, a short-period blazed fiber grating rejection filter can be used to suppress the 1600 nm radiation if desired.

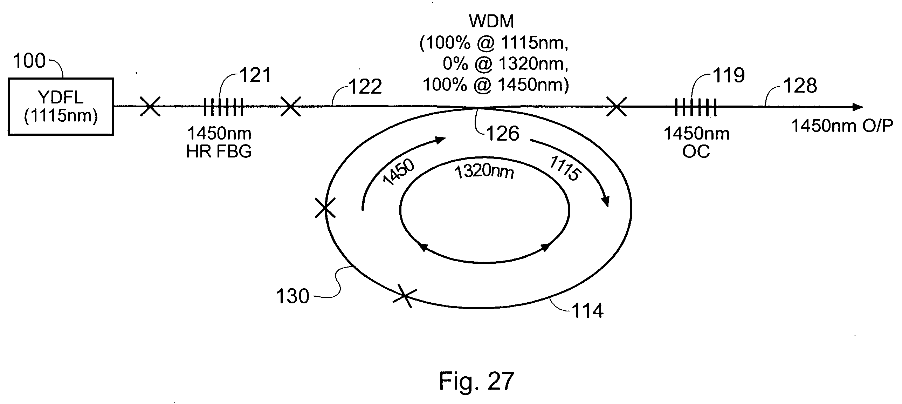

Figure 27 shows another embodiment of the invention which is a laser. The laser of this embodiment may be understood as the analog of the laser of Figure 12, but for the 2-step Raman process of Figure 26, rather than that of Figure 6.

A YDFL 100 is connected to an input waveguide 122 which leads to a WDM coupler 126. The WDM coupler 126 joins the input waveguide 122 to an output waveguide 128 and first and second ends of a ring waveguide 114 comprising phosphosilicate. The WDM coupler is fabricated with the transmission characteristics shown by the figure labeling. Namely, the WDM coupler is manufactured: (i) to couple substantially all the light at the pump wavelength of 1115 nm from the input waveguide into the ring waveguide; (ii) to couple substantially none of the light at the intermediate gain wavelength of 1320 nm out of the ring waveguide; and (iii) to couple substantially all of light at the emission wavelength of 1450 nm out of the ring waveguide 114 into the output waveguide 128.

To form a laser cavity at the emission wavelength (1450 nm) there is provided a pair of 1450 nm HR FBGs 119 and 121. The 1450 nm FBG 121 is arranged in the input waveguide 122 to form the back reflector of the laser cavity. The 1450 nm FBG 119 is arranged in the output waveguide 128 for form the output coupler of the laser cavity. A linear laser cavity at the emission wavelength is thus formed external to the ring waveguide 114. The ring waveguide 114 forms a cavity at the intermediate gain wavelength (1320 nm) by virtue of the transmission characteristics of the WDM coupler 126 at the gain wavelength.

The laser further comprises a 1380 nm rejection filter 130 in the form of a section of fiber with OH⁻ impurity arranged in the ring waveguide 114. With reference to Figure 26, it can be seen that 1380 nm corresponds to around one Stokes shift from the gain wavelength (1320 nm) for the 450 cm⁻¹ silica Raman scattering line. The 1380 nm rejection filter 130 thus suppresses the 1380 nm radiation from building up in the loop. The rejection filter 130 has a low loss at 1320 nm (the gain wavelength) as well as at 1450 nm (the emission wavelength). The rejection filter is preferably arranged towards the end of the ring waveguide loop (as viewed for the pump radiation) as illustrated. With this positioning, the pump beam (1115 nm) has already been substantially fully absorbed before arriving at the rejection filter. Consequently, the properties of the rejection filter at the pump wavelength are unimportant which removes one design constraint from the rejection filter. By including a rejection filter to suppress gain from 450 cm⁻¹ Raman scattering from the gain wavelength, it is not longer a requirement of the laser that the Raman gain in the loop for 680 - 820 cm⁻¹ scattering from the gain wavelength (i.e. at 1450 nm) exceeds that for 450 cm⁻¹ scattering from the gain wavelength (i.e. at 1320 nm).

It will be appreciated that other variations of the 1115 nm pumped designs are possible, based on the above-described embodiments for 1060 nm pumped devices. Specifically, not only lasers, but also ASE sources and MOPAs may be designed based on the 2-step Raman process illustrated in Figure 26.

An advantage with the 2-step approach of Figure 26 is that the Raman gain spectrum is wide around 700 cm⁻¹. This means that in a seeded configuration, such as for MOPA embodiments, a number of seed wavelengths can be used around 1455 nm to make the output spectrally wider. A broad spectrum around 1450 nm can be used to broaden the gain around 1550 nm in a Raman amplifier.

It is also noted that an OH⁻-containing fiber can also be used for suppressing unwanted emission in a two-stage Raman converter from, e.g., 1090 nm to 1530 nm (2 steps of 1330 cm⁻¹). A wavelength of 1530 nm can be used as a Raman pump for 1650 nm light, which may be of interest.

### Alternative Aspects of the Invention

Although not originally claimed, the right is reserved to file divisional, continuation, or continuation-in-part applications directed to the following alternative aspects of the invention.

For the MOPA, ASE source, and other seeded source embodiments described above, further embodiments may be contemplated in which the ring cavity at the gain wavelength is replaced with a linear cavity, as in Figure 2.

According to a first alternative aspect of the invention there is provided a light source, such as a MOPA, ASE source, or other seeded source, comprising:
(a) a pump source operable to emit a pump beam at a pump wavelength;
(b) an input waveguide arranged to receive the pump beam from the pump source;
(c) a Raman gain waveguide coupled to the input waveguide so as to receive at least a part of the pump beam, the Raman gain waveguide having at least a portion that is phosphosilicate so as to Raman scatter the pump beam from the pump wavelength to a gain wavelength that is offset from the pump wavelength by a first Raman step of 1300-1400 cm⁻¹, thereby to produce Raman gain; and
(d) an output waveguide coupled to the Raman gain waveguide to couple out an emission beam at an emission wavelength that is offset by a second Raman step from the gain wavelength.

The second Raman step may be offset from the gain wavelength by 1300-1400cm⁻¹, or by 680-820 cm⁻¹.

The gain wavelength may be between 1230-1250 nm, or between 1300-1330 nm. The pump wavelength may be between 1050-1070 nm or between 1100-1130 nm. The emission wavelength may be between 1450-1500 nm.

The input waveguide, output waveguide and Raman gain waveguide are preferably optical fiber components. However, in principle other waveguides, such as planar waveguides, could be used, although with current technology losses would be much higher than in optical fibers.

Further alternative aspects of the invention combine the first alternative aspect of the invention with any of the additional features of the appended dependent claims recited below.

### REFERENCES

[1] EP 0 984 532 A (Lucent)
[2] Chang et al, Electronics Letters, vol. 35, pages 1951-1952 (1999)
[3] US 5,854,865 (Goldberg)
[4] US 5,999,673 (Valentin et al)
[5] WO 96/37936 (Imperial College)
[6] US 5,838,700 (Dianov et al)
[7] Dianov et al, OAA 99 (Optical Amplifiers and their Applications) ThA1-1, pages 68-71, Optical Society of America
[8] Karpov et al, Optics Letters vol. 24, pages 887-889 (1999)
[9] Karpov et al, Can. J. Phys, vol. 78, pages 407-413 (2000)
[10] Karpov et al, OFC 99, WM3-1, pages 202-204, Optical Society of America

## Claims

1. A light source comprising:
(a) a pump source operable to emit a pump beam at a pump wavelength;
(b) an input waveguide arranged to receive the pump beam from the pump source;
(c) a wavelength selective coupler connected to the input waveguide;
(d) a ring waveguide connected to the input waveguide by the wavelength selective coupler, the wavelength selective coupler being formed so as to receive at least a part of the pump beam into the ring waveguide, the ring waveguide having at least a portion that is phosphosilicate so as to Raman scatter the pump beam from the pump wavelength to a gain wavelength that is offset from the pump wavelength by a first Raman step of 1300-1400 cm⁻¹, wherein the wavelength selective coupler is further formed to retain light at the gain wavelength in the ring waveguide, thereby to form a resonant cavity at the gain wavelength for producing Raman gain in the ring waveguide at the gain wavelength; and
(e) an output waveguide connected to the ring waveguide by the wavelength selective coupler, the wavelength selective coupler being still further formed to couple out from the ring waveguide, as an emission beam, light at an emission wavelength that is offset by a second Raman step from the gain wavelength.

2. A light source according to claim 1, further comprising a laser cavity resonant at the emission wavelength and including the ring waveguide, whereby the light source is a laser.

3. A light source according to claim 2, wherein the laser cavity is a linear laser cavity.

4. A light source according to claim 3, wherein the linear laser cavity is formed by first and second emission wavelength reflectors external to the ring waveguide.

5. A light source according to claim 3, wherein the linear laser cavity is formed by a first emission wavelength reflector external to the ring waveguide and a second emission wavelength reflector internal to the ring waveguide.

6. A light source according to claim 2, wherein the laser cavity is a ring laser cavity.

7. A light source according to claim 6, wherein the ring laser cavity is congruent with the ring waveguide.

8. A light source according to claim 6, wherein the ring laser cavity is formed in part by the ring waveguide and in part by a further waveguide.

9. A light source according to claim 1, wherein the ring waveguide is not part of a cavity at the emission wavelength so that the emission beam is incoherent, whereby the light source is an amplified stimulated emission (ASE) source.

10. A light source according to claim 9, further comprising an optical isolator in the output waveguide.

11. A light source according to claim 9 or 10, further comprising a reflector structured and arranged to reflect light at the emission wavelength to cause it to traverse the ring waveguide in first and second passes.

12. A light source according to claim 1, further comprising a seed source operable to emit a seed beam at the emission wavelength and arranged to couple the seed beam into the ring waveguide, whereby the seed beam is amplified into the emission beam by stimulated Raman scattering over the second Raman step, whereby the light source is a seeded source.

13. A light source according to claim 12, further comprising a seed beam router for the emission wavelength arranged to direct the seed beam so that it traverses the ring waveguide in at least first and second passes.

14. A light source according to claim 13, wherein the seed beam router is arranged in the ring waveguide.

15. A light source according to claim 13, wherein the seed beam router is arranged external to the ring waveguide.

16. A light source according to claim 13, 14 or 15, wherein the seed beam router is a Bragg grating having a Bragg wavelength matched to the emission wavelength.

17. A light source according to claim 15, wherein the seed beam router is an optical circulator.

18. A light source according to claim 15, wherein the seed beam router is a polarization rotating mirror arranged to rotate the polarization state of the seed beam between the first and second passes, and wherein the light source further comprises a polarizing beam splitter (PBS) arranged in a common path of the seed and emission beams.

19. A light source according to claim 18, further comprising a mirror reflective to the emission wavelength and arranged to one side of the PBS so as to initiate third and fourth passes of the seed beam in the ring waveguide.

20. A light source according to any one of the preceding claims, further comprising a filter arranged in the ring waveguide to suppress a parasitic wavelength associated with a third Raman step offset by 400-500 cm⁻¹ from the gain wavelength.

21. A light source according to claim 20, wherein the filter comprises a length of OH-containing waveguide.

22. A light source according to claim 20, wherein the filter comprises a bend in the ring waveguide for generating bend loss at the parasitic wavelength.

23. A light source according to claim 20, wherein the filter comprises a length of praseodymium-containing waveguide.

24. A light source according to any one of claims 1 to 23, wherein the second Raman step is offset from the gain wavelength by 1300-1400cm⁻¹.

25. A light source according to any one of claims 1 to 23, wherein the second Raman step is offset from the gain wavelength by 680-820 cm⁻¹.

26. A light source according to any one of claims 1 to 25, wherein the gain wavelength is between 1230-1250 nm.

27. A light source according to any one of claims 1 to 25, wherein the gain wavelength is between 1300-1330 nm.

28. A light source according to any one of claims 1 to 27, wherein the pump wavelength is between 1050-1070 nm.

29. A light source according to any one of claims 1 to 27, wherein the pump wavelength is between 1100-1130 nm.

30. A light source according to any one of the preceding claims, wherein the emission wavelength is between 1450-1500 nm.

31. A light source according to any one of the preceding claims, wherein one or more of the input waveguide, output waveguide and ring waveguide is an optical fiber waveguide.

32. A method of generating an emission beam having an emission wavelength, comprising:
(a) inputting a pump beam at a pump wavelength into a ring waveguide comprising phosphosilicate;
(b) down-converting the pump beam by a first Raman step of 1300-1400 cm⁻¹ to form a gain beam having a gain wavelength at which the ring waveguide forms a resonant cavity at the gain wavelength to provide gain;
(c) down-converting the gain beam to the emission wavelength by a second Raman step; and
(d) coupling out from the ring waveguide a proportion of light at the emission wavelength to deliver the emission beam.

33. A method according to claim 32, further comprising:
(e) inputting a seed beam at the emission wavelength into the ring waveguide.

34. A method according to claim 32, further comprising:
(e) providing a laser cavity resonant at the emission wavelength and including the ring waveguide.

35. A method according to claim 32, wherein the ring waveguide is not part of a cavity at the emission wavelength.

36. A method according to any one of claims 32 to 35, wherein the second Raman step is offset from the gain wavelength by 1300-1400 cm⁻¹.

37. A method according to any one of claims 32 to 35, wherein the second Raman step is offset from the gain wavelength by 680-820 cm⁻¹.
